(19) Europäisches Patentamt European Patent Office Office européen des brevets

(11) **EP 1 742 160 A1**

(12) **EUROPEAN PATENT APPLICATION**

(43) Date of publication:
**10.01.2007 Bulletin 2007/02**

(51) Int Cl.:
*G06F 17/50* (2006.01)

(21) Application number: **06116863.9**

(22) Date of filing: **07.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.07.2005 IT TO20050472**

(71) Applicant: **ANSALDO ENERGIA S.P.A.**
**16152 Genova (IT)**

(72) Inventors:
- **Rigoli, Luigi**
  **16166 Genova (IT)**
- **Cecchi, Stefano**
  **17047 Vado Ligure (IT)**

(74) Representative: **Jorio, Paolo et al**
**Studio Torta S.r.l.**
**Via Viotti, 9**
**10121 Torino (IT)**

(54) **Method for optimization of blade profiles**

(57) Described herein is a method for optimization of blade profiles, comprising the steps of: providing a plurality of data that describe the geometry of at least one blade profile; performing (20) a preliminary treatment of the data (10); and carrying out (30) a procedure of an integrated type, which enables modification of the data by means of a plurality of macro-functions (for example, calculation of the camber-line, modification of the profile delimiting the trailing edge of the blade section, etc.). The method enables a user, even without any knowledge of CAD, to carry out by means of a graphic interface the operations of optimization of the blade profile.

Fig.1

## Description

The present invention relates to a method for optimization of blade profiles.

As is known, the shape of the blades of steam turbines and gas turbines is normally described by means of sets of data that define a plurality of sections, each of which describes the profiles delimiting the section itself.

Said sections are conveniently represented by means of design programs of a CAD (Computer-Aided Design) type.

The operations of optimization of the sections are normally carried out by technicians and engineers, who have a specific expertise in fluid dynamics but usually are not sufficiently acquainted with the use of CAD.

For this reason, according to the known art, in the field of optimization of aerodynamic profiles to be applied on turbomachines, a traditional approach is pursued, in which the engineering skills (fluid dynamics and drawing) remain clearly separated from the knowledge of CAD.

The process of optimization thus develops through a recursive and interactive process, in which two or more technicians having different skills (i.e., engineering and use of CAD) participate.

The aim of the present invention is to provide a method that will enable a single user, even without any specific expertise in use of CAD, to carry out the operations of optimization of a blade profile.

The above purpose is achieved by the present invention in so far as it relates to a method for optimization of blade profiles, characterized in that it comprises the steps of:

> providing a plurality of input data that describe the geometry of at least one blade profile, said input data comprising the co-ordinates of sets of points that define the profiles of a plurality of sections of the blade profile; carrying out (20) a preliminary treatment of said data (10) in order to enable a convenient graphic representation of the data and/or a subsequent processing of the data; operating an integrated-type procedure which, starting from the data possibly subjected to preliminary treatment, enables modification of said data by means of a plurality of macro-functions, said macro-functions involving at least one of the following steps:
> calculation of the camber-line, said operation of calculation enabling determination of the mean line of the blade section in order to monitor the continuity of the profile; modification of the profile delimiting the trailing edge of the blade section;
> optimized re-distribution of points; and
> blade interpolation, said function generating a new section starting from the data representing known sections;
> the method further comprising the step of issuing the data modified by means of at least one of said macro-functions to other users.

In this way, the method of the present invention enables a single user to obtain an optimization of the blade profile using commands of a simple (user friendly) type thus arriving at the same final result that would be obtained with a long exchange of requests and data between the engineer skilled in fluid dynamics and the skilled CAD designer.

The invention will now be illustrated with particular reference to the attached figures, which illustrate a preferred non-limiting embodiment thereof, and in which:

- Figure 1 is a schematic illustration of the main operations of the method of the present invention;
- Figure 2 represents in detail first operations of the method of the present invention;
- Figure 3 represents in detail second operations of the method of the present invention;
- Figures 4 and 5 are graphic illustrations of operations of the method according to the present invention;
- Figure 6 represents in detail third operations of the method of the present invention;
- Figure 7 is a graphic illustration of the third operations of the method according to the present invention;
- Figure 8 represents in detail fourth operations of the method of the present invention; and
- Figure 9 is a graphic illustration of the fourth operations of the method according to the present invention.

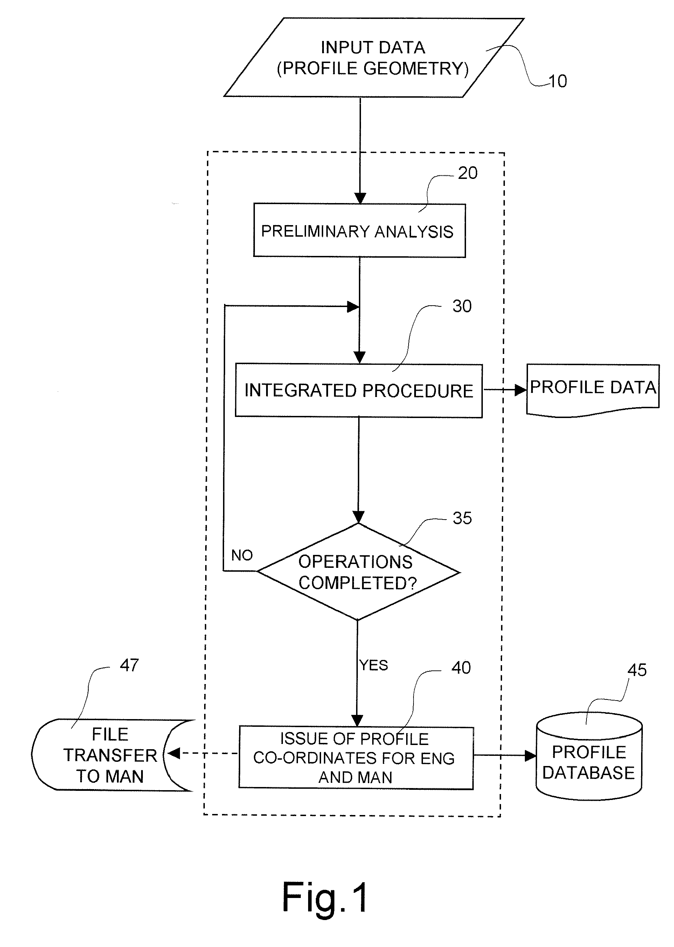

In Figure 1, designated as a whole by 1 are the main operations of the method according to the present invention that can be implemented on a processing device (for example, a computer network - not illustrated) which receives at input a plurality of data 10 that describe the geometry of one (or more) blade profiles.

In particular, the input data comprise the two-dimensional co-ordinates (X, Y) of sets of points that define the profiles of a plurality of sections of a blade profile.

The input data are, for example, obtained:

- as output of computation codes, for example, CFD (Computational Fluid Dynamics);
- from drawings obtained with CAD;
- from design documents (text format); and
- by acquisition using the (electromechanical) feeler.

The input data are supplied to a block 20, which carries out a preliminary treatment of said data 10 in order to enable a convenient graphic representation of the data and/or an efficient subsequent processing of the data themselves.

Amongst the preliminary treatment operations we can, for example, list:

> a) geometrical operations of scaling and rotation;
> b) operations for entering new points;

c) operations for elimination of existing points;

d) operations for moving points;

e) operations for ordering the points;

f) interpolation of the profile using parametric cubic splines; and

g) operations for enlargement of the sections represented.

As regards, for example, the scaling operations a), these can be obtained by means of simple algorithms whereby the co-ordinates X and Y of the points defining the profiles are multiplied by an appropriate constant supplied by the user (default 1.0). Said operations can also obtain, by means of the normal relations of analytical geometry, rotation of the profile about the origin of the axes according to an angle defined by the user (default 0°).

The operations for entering new points b) are typically performed following two steps:

- a first step, in which the user selects a point on the screen with the mouse;
- a second step, in which a new point is created which precedes, according to the conventions used by the procedure (for example, according to an ordering of a clockwise type), the point that is selected as reference; the co-ordinates of the point selected are determined by the program by transformation from graphic co-ordinates into physical co-ordinates.

Elimination c) of one or more points occurs through selection of two points of the profile using the mouse. If the two points do not coincide, the interval of points comprised between them is eliminated. If, instead, the same point is selected twice, this is eliminated.

Moving of a point (operation d)) occurs by selecting a point on the screen with the mouse. The user selects the desired point on the image represented on the monitor by pressing the left-hand button of the mouse. The program calculates by transformation from graphic co-ordinates into physical co-ordinates the physical co-ordinates of the new point and identifies, amongst the points already existing on the profile, the one that is closest to the point selected (desired) by the user. Next, the program replaces the co-ordinates of the already existing point with the co-ordinates of the new point. It is to be noted that the procedure of moving of the points, by its very nature, entails modifications to the initial profile to a very limited extent. Said operation must then be associated to processes of smoothing or optimization of the curvatures to be carried out both within the software and using aerodynamic calculation tools (inverse codes or optimization codes).

The operations e) perform ordering of the points that define the profiles of the section in such a way that they will be arranged in sequence along the profile according to a pre-set order (for example, in the clockwise direction) starting from a point established as initial point (in particular, a point that lies on the profile SS of the blade upstream of the profile TE corresponding to the trailing edge of the blade).

The operations f) are based on the interpolation of the profile itself by using parametric cubic splines.

On the basis of the set of co-ordinates of the given points X(i), Y(i) with i = 1, Npts

a parametric representation of the profile is constructed X(S(i)), Y(S(i)) with i = 1, Npts

where the parameter S(i) is the curvilinear co-ordinate along the closed curve defined by the profile itself that corresponds to the contour of the profile.

Said curvilinear co-ordinate is obtained by integrating the following function numerically:

$$dS = \sqrt{(dx^2 + dy^2)}$$

This interpolation enables generation of many more points as compared to the original ones and enables the other operations to be carried out with adequate precision.

From block 20 it is possible to access a block 30, in which a procedure of an integrated type can be carried out, which, starting from the input data - possibly modified in block 20 - , enables modification of said data by means of a plurality of macro-functions.

The macro-functions illustrated implement at least one of the following steps:

- Calculation of the camber-line. This operation enables determination of the mean line of the blade section by monitoring the continuity of the profile.
- Modification of the profile delimiting the trailing edge of the blade section.
- Operations of optimized re-distribution of points.
- Control of the channel: **by "channel" is meant the area comprised between two adjacent profiles of an array: said area can lie on a plane surface or else on a cylindrical surface having as axis that of the turbine.** This operation enables treatment of profiles "in arrays", verifying the geometrical characteristics thereof and the parameters that affect the performance. **For example, the ratio "pitch/chord" is a parameter characteristic of the array and affects the efficiency.**
- "Optimal" stacking of blade sections. By means of this function the data representing the individual profiles or sections thereof are processed in such a way that the profiles will be virtually superimposed in space according to a pre-set law, for example, in such a way that the centroids of the profiles will lie on a curve with pre-set characteristics.
- Blade interpolation. This function generates - on the basis of a pre-set law - a new section starting from the data representing known sections.

- Recalculation of the geometrical properties (for example, mass and inertia) of the sections to be optimized.

- Conversion of the profiles. This function enables treatment of the profiles when defined by arcs of circumference. The profiles can be in fact defined "by points" identified by the co-ordinates (X, Y) with respect to a reference system of axes or else by "arcs of circumference", identified by a radius of curvature and by the co-ordinates (X, Y) of the centre of the radius with respect to a reference system. Said function enables, in the case where the profiles are defined by arcs of circumference, elimination of any oscillations that cannot be detected directly, thus reconverting the profile. The profile represented by arcs of circumference can in fact present anomalous inflexions and curvatures not detectable to the naked eye: the function illustrated above provides a sort of "smoothing" that eliminates said drawback.

Block 30 is followed by a block 35, which verifies completion of the operations of preliminary treatment and/or of the procedure of an integrated type.

At the end of said operations, block 30 is followed by a block 40, which issues the data modified by the operations of blocks 20 and 30 to a database 45, in which the data are stored, and to units 47, which are accessible to other users by whom the data are used.

For example, the units 47 can co-operate with numeric-control machine tools (not illustrated), which use the data processed by the method according to the present invention to build blades of turbines corresponding to the blade profile processed.

By means of the aforesaid operations the starting data are the same data that are used - in known procedures - by the team of engineers and CAD operators and it is possible to produce the same optimization results as the ones that are obtained in the known art; the operations with which said results are achieved are, however, completely different in so far as they are obtained by an automated procedure that can be used by a single user even without any knowledge of CAD.

The use of the operations of preliminary treatment of block 20 and the accessibility of the macro-functions enable treatment of the sections of the blade profile even without any specific knowledge of CAD.

The selections of the operations of blocks 20 and 30 can be obtained by means of an interface of a graphic type that proposes choice of one of the various functions allowed.

Following upon selection of a function, a representation in the Windows™ environment is activated, which enables selection of sub-functions.

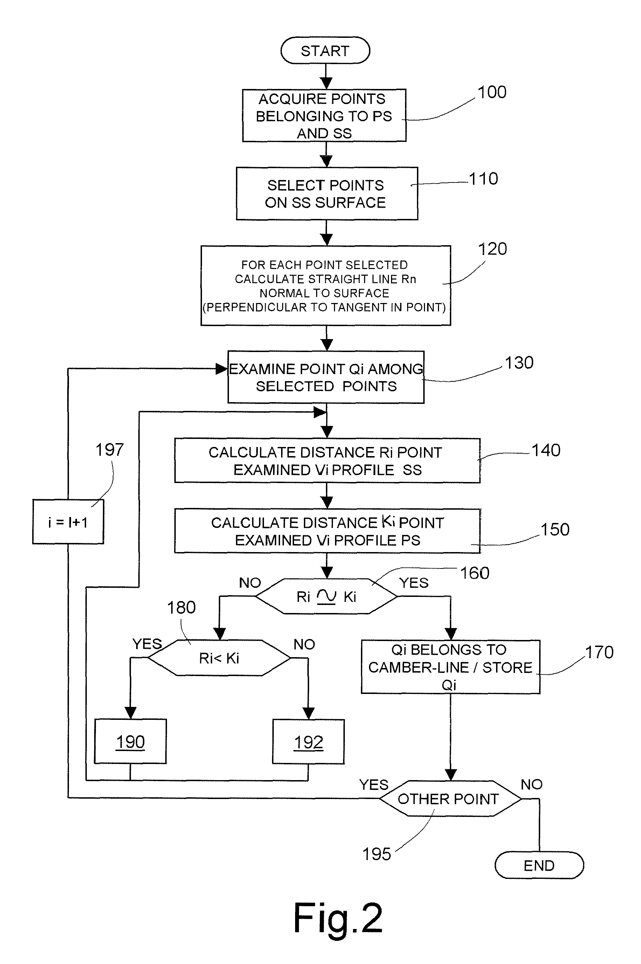

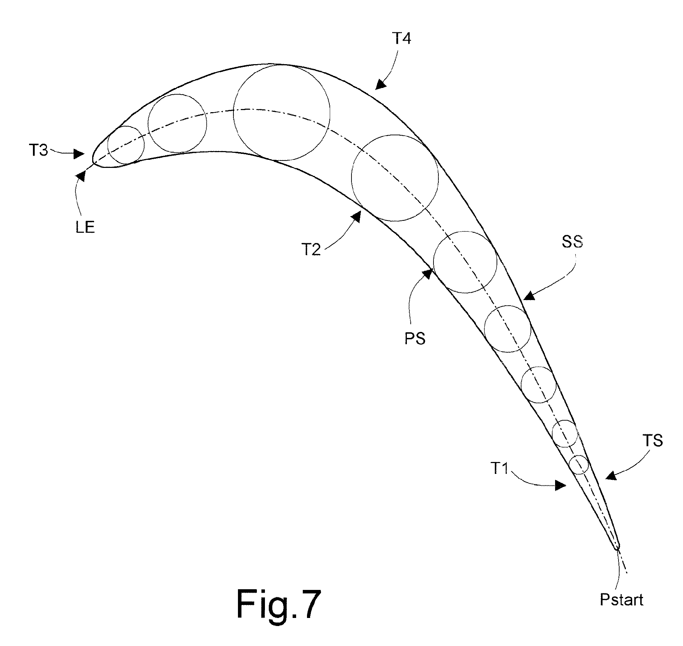

With particular reference to Figures 2 and 7, the operations of calculation for determination of the points that define the camber-line will now be illustrated.

Said operations are extremely important in so far as thereby it is possible to calculate a plurality of parameters that are used for subsequent processing operations.

It is pointed out how the camber-line is defined as the mean line of the section corresponding to the locus of the centres of all the circumferences that are tangential simultaneously to two points of the blade section belonging respectively to the profile defining the extrados SS and the profile defining the intrados PS of the blade.

Said operations comprise an initial block 100, whereby all the points $P_{ed}$ $P_{id}$ that define, in the blade section, the profile of the extrados SS and intrados PS are selected.

Block 100 is followed by a block 110, which extracts a first subset $P_{ed-1}$ of points $P_{ed}$ and a second subset $P_{id-1}$ of points $P_{id}$.
Block 110 is followed by a block 120, which selects all the points belonging to the first subset $P_{ed-1}$ or to the second subset $P_{id-1}$.

Block 120 calculates for each point selected the straight line **Rn** normal to the profile on which the point itself lies. Said operation can be carried out analytically by using algorithms of a known type.

Block 120 is followed by a block 130, which selects a first point Pi for which the normal straight line Rn has been calculated and for said point calculates (block 140 following upon block 130) the distance $D_{Pi-Oi}$ between the point Pi itself and a point Oi set in an arbitrary position along the normal straight line Rn. Said distance is the radius Ri of a generic circumference Ci tangential to the profile in the point Pi.

Block 140 is followed by a block 150, which calculates the minimum value of the distance between the point Oi lying on the straight line Rn and the other profile, i.e., the one that does not contain the point Pi.

Said distance is the radius Ki of a generic circumference tangential to the other profile and having its centre in the point Oi.

Block 150 is followed by block a 160, which verifies whether the radius Ri is sensibly equal to the radius Ki; if so (Ri $\cong$ Ki), block 160 is followed by a block 170, which recognizes the point Oi as belonging to the camber-line. The position of the point Oi is then stored.

In the case where the radius Ri is not equal to the radius Ki, then block 160 is followed by a block 180, which verifies whether the radius Ri is smaller than the radius Ki.

If it is (Ri < Ki), the point Oi is shifted along the normal Rn in order to increase Ri (block 190 following upon block 180); otherwise (Ri > Ki) the point Oi is shifted along the normal Rn in order to decrease Ri (block 192 following upon block 180).

From blocks 190 and 192, control returns to block 140 for repetition of the operations of calculation.

Block 170 is followed by a block 195, which verifies whether other points Pi to be examined are present; if so, from block 195 control returns to block 130 after passing through a block 197, which selects a point Pi subsequent to the one being used.

In the case where no other point to be examined is present, the operations described with the aid of Figure 2 terminate.

At the end of the iterations described above a plurality of points Oi are stored, which define the profile of the camber-line.

As highlighted above, it is possible to calculate, once the camber-line is known, a plurality of parameters of the profile, amongst which the following may be listed:

- the thickness of the profile; and
- the chord of the profile defined as linear distance between the end points of the camber-line.

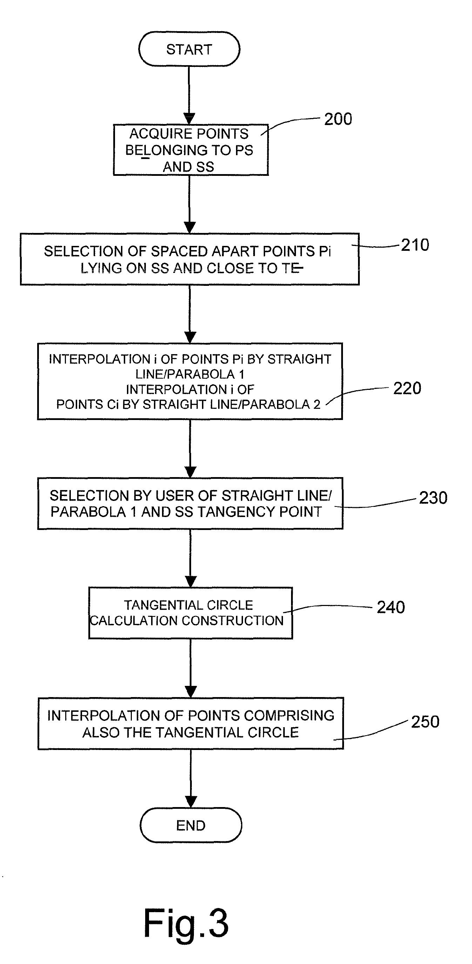

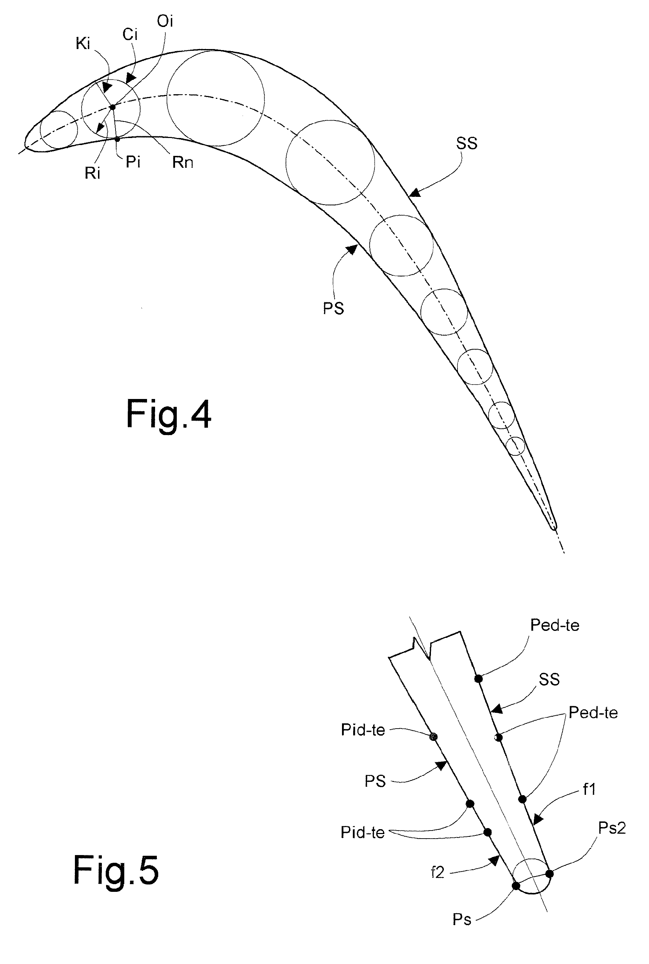

With particular reference to Figures 3, 4 and 5 the operations of calculation for modification of the profile that delimits the section of the trailing edge TE of the blade section will now be illustrated.

Said operations comprise an initial block 200, in which the points $P_{ed}$ $P_{id}$ are acquired, which define, in the blade section, the profile of the extrados SS and of the intrados PS.

Block 200 is followed by a block 210, which extracts a first subset $P_{ed-te}$ of points $P_{ed}$ and a second subset $P_{id-te}$ of points $P_{id}$.

Said points $P_{ed-te}$ and $P_{id-te}$ are set at a distance from one another and are arranged in an area close to the profile of the trailing edge TE.

Block 210 is followed by a block 220, which carries out interpolation of the points $P_{ed-te}$ by means of a first interpolating function f1.

Block 220 carries out interpolation of the points $Pi_{id-te}$ by means of a second interpolating function f2.

The interpolating functions f1 and f2 can, for example, be based upon interpolating straight lines or interpolating parabolas. The selection of the type of interpolating function (linear/polynomial) can be made by the user.

Block 220 is followed by a block 230, which supplies a graphic representation to the user of the program in which the blade section and the interpolating functions f1, f2 are displayed. In this way, the operator can, by means of the usual interfaces operating in a graphic environment, select a point Ps of the image in which a first one of the two interpolating functions f1, f2 is tangential to the respective profile of the extrados SS or of the intrados PS.

Preferably, the operator selects a point Ps that lies on the interpolating function that passes through the profile of the extrados SS.

After the operations of block 230, the next block is block 240, which calculates the circumference passing through the point Ps and tangential to the second interpolating function in a point Ps2.

Block 240 is followed by a block 250, which attributes points of the circle comprised between the points Ps and Ps2 to the re-calculated trailing edge TE of the blade section.

The operations illustrated above can be carried out by means of a specific pull-down menu, which encloses all the checks necessary for completing said steps.

The re-definition or definition of the trailing edge by means of an arc of circumference enables simplification of the shape of the blade rendering the subsequent operations of production easier (said procedure can be applied also to components less sophisticated than the blades of turbomachines, such as, for example, the fins in the naval field).

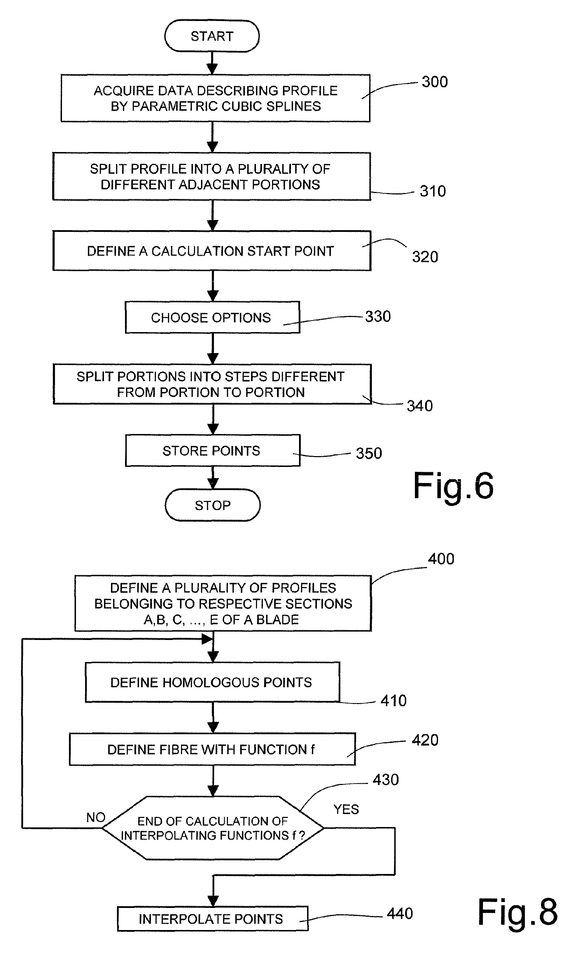

With particular reference to Figure 6, the operations of optimized redistribution of the points comprise an initial block 300, which acquires data that describe the profile by means of parametric cubic splines - said data can, for example, be obtained by means of the operations f) illustrated above.
Block 300 is followed by a block 310, which splits the profile into a plurality of different adjacent portions; in particular, the profile is split (Figure 7) into five portions:

- a portion T1 corresponding to the trailing edge TE facing the extrados PS;
- a portion T2 corresponding to the extrados PS;
- a portion T3 corresponding to the leading edge LE of the blade section;
- a portion T4 corresponding to the intrados SS; and
- a portion T5 corresponding to the trailing edge TE facing the intrados SS.

Block 310 is followed by a block 320, which defines a point $P_{start}$ of start of calculation; said point $P_{start}$ can be defined as point of intersection between the camber-line (calculated as described previously) and the profile of the trailing edge TE.

Block 320 is followed by a block 330, which performs a graphic presentation to the user in Windows™ environment through which he can choose a series of options for the operations of redistribution of the points.

Block 330 is followed by a block 340, which, starting from the point of start of calculation, splits each portion into a plurality of steps, obtaining the end points of the steps that lie on the profile; the steps have different amplitudes for different portions in such a way as to create different definitions portion by portion.

In particular, the steps are greater for the portions T2 and T4 and smaller in the other portions in order to render the points denser in the areas of the profile corresponding to the leading edge LE and trailing edge TE.

Block 340 is followed by a block 350, which stores the points calculated.

In this way, the operations of Figure 6 enable recalculation of the co-ordinates of the points, starting from the original ones and redistributing them with an optimized spacing, which improves the definition of the profile (the need to improve the definition of the profile with a smaller number of points is felt when carrying out aerodynamic calculations).

Said distribution guarantees that the points will be denser in the regions with high curvature (typically trailing edge TE and leading edge LE) and that they will be less dense in the areas with high radiuses of curvature (for example, intrados and extrados).

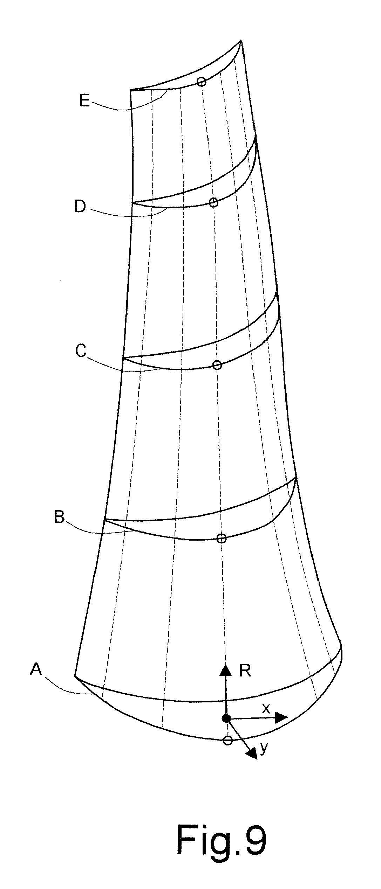

With particular reference to Figure 8, the operations of blade interpolation will now be described, which generate new sections starting from a plurality of sections defined as master.

The operations comprise an initial block 400 in which sets of points (X, Y) are acquired, which define a plurality of profiles belonging to respective sections A, B, C, ..., E of a blade spaced at an axial distance apart from one another along an axis R perpendicular to the axes X and Y (see Figure 9). Said profiles define a reference structure (master).

Block 400 is followed by a block 410, which defines a first point on a first profile and seeks on each other profile the homologous point, i.e., the point corresponding as regards its relative position to the selected one. The operations of selection of the homologous points are widely known in the literature and are not consequently described in any further detail.

Block 410 is followed by a block 420, which defines the interpolating function **f**, referred to as fibre, which joins together homologous points belonging to different sections.

In this way, the co-ordinates X, Y of a profile are functions of the radial position R through the function f, i.e.,:

$$X = f(R)$$

$$Y = f(R)$$

Block 420 is followed by a block 430, which verifies whether calculation of the interpolating functions is completed; if it is, control passes on to a block 440; otherwise, it returns to block 410 for definition of other homologous points and of another interpolating function f.

Block 430 is followed by block 440, which performs interpolation of the profile on the basis of an input value R' on the basis of the aforesaid relation, namely:

$$X = f(R')$$

$$Y = f(R')$$

In this case (interpolation with R constant) the calculations are very simple.

In the case where it is desired to interpolate a section with R not constant, i.e. to intersect the blade with an axisymmetrical flow-pseudo-surface (which can be described with the relation R = f(X)) the method of the present invention sets the equations given below to form a system:

$$R = f(X)$$

and

$$X = f(R)$$

The solution of the system is obtained numerically by means of known mathematical methods and yields at output the values of X and of R.

Next, the co-ordinate Y is obtained from the relation Y = f(R).

The method consequently enables generation of plane, cylindrical or conical sections according to the parameters entered by the user in a purposely provided pull-down window. The result of the interpolation is displayed on the monitor with views in orthogonal and axonometric projection that can be selected by the user.

Since the user can request interpolation of more than one section from the same master, the software enables some alternative options:

- elimination of the interpolated section;
- inclusion of the section just interpolated among the original sections of the master; and
- saving in a temporary data structure of the section just interpolated.

The third option is preferable in the case of interpolation of multiple sections in so far as it enables generation of the various sections starting always from the same master. The second option, instead, leads to a slight variation of the fibres, which may affect, albeit to a limited extent, generation of the subsequent sections.

At the end of the procedure, of course, the software enables inclusion en bloc of all the new sections generated. This operation evidently requires a reorganization of the initial data structure.

Finally, as an alternative, just the sections interpolated can be saved in a new given file.

**Claims**

1. A method for optimization of blade profiles, **characterized in that** it comprises the steps of:

  - providing a plurality of input data (10) that describe the geometry of at least one blade profile; said input data comprising the co-ordinates of sets of points that define the profiles of a plurality of sections of the blade profile;

- carrying out (20) a preliminary treatment of said data (10) in order to enable a convenient graphic representation of the data and/or a subsequent processing of the data; and

- operating (30) an integrated-type procedure which, starting from the data possibly subjected to preliminary treatment, enables modification of said data by means of a plurality of macro-functions;

said macro-functions implementing at least one of the following steps:

• calculation of the camber-line; said operation of calculation enabling determination of the mean line of the blade section in order to monitor the continuity of the profile;

• modification of the profile delimiting the trailing edge of the blade section;

• optimized re-distribution of points;

• blade interpolation; said function generating a new section starting from the data representing known sections;

the method further comprising the step of supplying (40) the data modified by means of at least one of said macro-functions to other users.

2. The method according to Claim 1, in which said step of calculation of the camber-line comprises the steps of:

- extracting (100, 110) a first set $P_{ed-1}$ of points and a second set $P_{id-1}$ of points that lie, in the blade section, respectively on the profile of the extrados SS and of the intrados PS;

- selecting (130, 120) at least one point Pi belonging to the first or to the second set and calculating the straight line **Rn** normal to the profile on which the point selected lies;

- calculating (140) the distance $D_{Pi-Oi}$ between the point Pi and a point Oi set in an arbitrary position along the normal straight line Rn; said distance representing the radius Ri of a generic circumference Ci tangential to the profile in the point Pi;

- calculating (150) the minimum value of the distance between said point Oi and the other profile that does not contain the point Pi; said distance expressing the radius Ki of a circumference tangential to the other profile and having its centre in the point Oi;

- verifying (160) whether the radius Ri is sensibly equal to the radius Ki;

- recognizing (170) the point Oi as belonging to the camber-line in the case where said verification step (160, YES) has yielded a positive outcome;

- modifying (190,192) the position of the point Oi along said straight line Rn in the case where said step of recognition (160) has not yielded a positive outcome and repeating iteratively said operations of calculation (140, 150) and of verification (160) to extract the point Oi belonging to the camber-line; and

- repeating (195) the operations of extraction of the points Oi belonging to the camber-line for a plurality of points selected.

3. The method according to Claim 2, in which in the case where said verification step (160) has yielded a negative outcome there are envisaged the steps of:

- verifying (180) whether the radius Ri is smaller than the radius Ki;

- said step of modification comprising the step of shifting the point Oi along the normal Rn in order to increase Ri in the case where the radius Ri is smaller than the radius Ki; and

- verifying (180) whether the radius Ri is greater than the radius Ki;

- said step of modification comprising the step of shifting the point Oi along the normal Rn in order to decrease Ri in the case where the radius Ri is smaller than the radius Ki.

4. The method according to Claim 3, in which said step of modification of the profile delimiting the section of the trailing edge TE of the blade section comprises the steps of:

- extracting (210) a first set $P_{ed-te}$ of points and a second set $P_{id-te}$ of points that lie, in the blade section, respectively on the profile of the extrados SS and of the intrados PS;

each point belonging to the first and second sets being spaced with respect to the points adjacent thereto; said points belonging to the first and second sets being arranged in an area close to the profile of the trailing edge TE;

- performing the interpolation (220) of the points $P_{ed-te}$ by means of a first interpolating function f1 and performing the interpolation of the points $Pi_{id-te}$ by means of a second interpolating function f2;

- supplying (230) to a user a graphic representation displaying the profile of the extrados SS and of the intrados PS and the interpolating functions f1, f2 in order to enable selection of the point Ps in which a first of the two interpolating functions f1, f2 is tangential to the respective profile;

- calculating (240) the circle passing through the point Ps and tangential to the second interpolating function in a point Ps2;

- attributing the points of the circle comprised between the points Ps and Ps2 to the re-calculated trailing edge TE of the blade section.

5. The method according to Claim 4, in which the type of interpolating function can be selected by the user.

6. The method according to Claim 4, in which the interpolating functions f1 and f2 are based upon interpolating straight lines.

7. The method according to Claim 4, in which the interpolating functions f1 and f2 are based upon interpolating parabolas.

8. The method according to Claim 1, in which said optimized redistribution of the points is based upon the following steps:

> - acquiring (300) data that describe the profile by means of parametric cubic splines;
> - splitting (310) the profile into a plurality of different adjacent portions;
> - splitting (340) each portion into a plurality of steps obtaining the end points of the steps that lie on the profile; the steps presenting different amplitudes for different portions in such a way as to create different definitions portion by portion; and
> - storing (350) the points calculated.

9. The method according to Claim 8, in which said step of splitting envisages splitting the profile into five portions, among which:

> - a portion T1 corresponding to the trailing edge TE facing the extrados PS;
> - a portion T2 corresponding to the profile of the extrados PS;
> - a portion T3 corresponding to the profile of the leading edge LE of the blade section;
> - a portion T4 corresponding to the profile of the intrados SS; and
> - a portion T5 corresponding to the profile of the trailing edge TE facing the intrados SS.

10. The method according to Claim 1, in which said step of blade interpolation comprises the steps of:

> - acquiring (400) sets of points (X, Y) defining a plurality of profiles belonging to respective sections (A, B, C ..., E) of a blade, which are spaced at an axial distance apart from one another along a radial axis R perpendicular to a first cartesian axis (X) and to a second cartesian axis (Y);
> - defining a plurality of homologous points on different profiles;
> - defining (420) a plurality of interpolating functions **f**, each of which joins together homologous points belonging to different sections;
- performing the interpolation of the profile on the basis of an input value of R' measured along the axis R on the basis of said interpolating functions **f**.

11. The method according to Claim 10, in which the co-ordinates X, Y of a profile are functions of the radial position R through the function f:

$$X = f(R)$$

$$Y = f(R)$$

said method implementing moreover the blade interpolation with a non-constant section R described by the relation R = f(X);
said method setting in a system and solving using numerical methods the following equations:

$$R = f(X)$$

and

$$X = f(R)$$

to yield at output the values of X and of R;
said method moreover yielding at output the co-ordinates Y by applying the relation Y = f(R).

Fig.1

Fig.2

START

ACQUIRE POINTS
BELONGING TO PS
AND SS — 200

SELECTION OF SPACED APART POINTS Pi
LYING ON SS AND CLOSE TO TE — 210

INTERPOLATION i OF POINTS Pi BY STRAIGHT
LINE/PARABOLA 1
INTERPOLATION i OF
POINTS Ci BY STRAIGHT LINE/PARABOLA 2 — 220

SELECTION BY USER OF STRAIGHT LINE/
PARABOLA 1 AND SS TANGENCY POINT — 230

TANGENTIAL CIRCLE
CALCULATION CONSTRUCTION — 240

INTERPOLATION OF POINTS COMPRISING
ALSO THE TANGENTIAL CIRCLE — 250

END

# Fig.3

Fig.4

Fig.5

START

ACQUIRE DATA DESCRIBING PROFILE BY PARAMETRIC CUBIC SPLINES — 300

SPLIT PROFILE INTO A PLURALITY OF DIFFERENT ADJACENT PORTIONS — 310

DEFINE A CALCULATION START POINT — 320

CHOOSE OPTIONS — 330

SPLIT PORTIONS INTO STEPS DIFFERENT FROM PORTION TO PORTION — 340

STORE POINTS — 350

STOP

Fig.6

DEFINE A PLURALITY OF PROFILES BELONGING TO RESPECTIVE SECTIONS A,B, C, ..., E OF A BLADE — 400

DEFINE HOMOLOGOUS POINTS — 410

DEFINE FIBRE WITH FUNCTION f — 420

END OF CALCULATION OF INTERPOLATING FUNCTIONS f ? — 430
NO          YES

INTERPOLATE POINTS — 440

Fig.8

Fig.7

Fig.9

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/086788 A1 (CHANDRAKER A L [IN] CHANDRAKER AMRIT LAL [IN]) 8 May 2003 (2003-05-08) in particular paragraph [0043] * the whole document * | 1-11 | INV. G06F17/50 |
| A | BOEHM W: "Bezier presentation of airfoils" COMPUTER-AIDED GEOMETRIC DESIGN NETHERLANDS, vol. 4, no. 1-2, July 1987 (1987-07), pages 17-22, XP002404658 ISSN: 0167-8396 in particular figure 1 * the whole document * | 1-11 | |
| A | US 5 586 053 A (PARK IN C [KR]) 17 December 1996 (1996-12-17) in particular col. 2, lines 43-63 * the whole document * | 1-11 | |
| A | GRASEL JURGEN ET AL: "A full parametric model for turbomachinery blade design and optimisation" PROC. ASME DES. ENG. TECH. CONF.; PROCEEDINGS OF THE ASME DESIGN ENGINEERING TECHNICAL CONFERENCE; PROCEEDINGS OF THE ASME DESIGN ENGINEERING TECHNICAL CONFERENCE AND COMPUTERS AND INFORMATION IN ENGINEERING CONFERENCE 2004: VOLUME 1: 30TH DESIGN AUT, vol. 1, 2004, pages 907-914, XP001247600 in particular page 910, sections 'BLADE DESIGN TOOL' and 'AEROFOIL SHAPE MODIFICATION' and page 911, section 'AEROFOIL OPTIMISATION' * the whole document * | 1-11 | TECHNICAL FIELDS SEARCHED (IPC) G06F |

The present search report has been drawn up for all claims

| Place of search | Date of completion of the search | Examiner |
|---|---|---|
| Munich | 26 October 2006 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 6863

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2006

| Patent document cited in search report | Publication date | Patent family member(s) | Publication date |
|---|---|---|---|
| US 2003086788 A1 | 08-05-2003 | NONE | |
| US 5586053 A | 17-12-1996 | CN 1089013 A | 06-07-1994 |
| | | KR 9507521 B1 | 11-07-1995 |